(19) **Europäisches Patentamt / European Patent Office / Office européen des brevets**

(11) **EP 1 134 976 B1**

(12) **EUROPEAN PATENT SPECIFICATION**

(45) Date of publication and mention
of the grant of the patent:
**09.01.2008 Bulletin 2008/02**

(51) Int Cl.:
***H04N 7/16*** *(2006.01)*     ***H04N 7/173*** *(2006.01)*
***H04N 5/445*** *(2006.01)*

(21) Application number: **01302424.5**

(22) Date of filing: **15.03.2001**

(54) **Information distribution system, information receiving apparatus, information list forming method, information deleting method, and information storing method**

Informationsverteilungssystem, Informationsempfangsgerät, Listenherstellungsmethode, Methode zum Löschen von Daten und Informationsspeicherverfahren

Système de distribution d'informations, dispositif de réception d'informations, procédé de construction de listes, procédé d'effacement d'informations et procédé de mémorisation d'informations

(84) Designated Contracting States:
**DE FR GB**

(30) Priority: **17.03.2000 JP 2000076607**

(43) Date of publication of application:
**19.09.2001 Bulletin 2001/38**

(73) Proprietor: **Sony Corporation
Tokyo 141 (JP)**

(72) Inventor: **Yuzawa, Keiji,
c/o Sony Corporation
Tokyo (JP)**

(74) Representative: **Robinson, Nigel Alexander Julian et al
D Young & Co
120 Holborn
London EC1N 2DY (GB)**

(56) References cited:
EP-A- 0 572 090     EP-A- 0 854 645
WO-A-98/21877     US-A- 5 848 396

**Description**

The invention relates to an information processing method and an information receiving apparatus which are suitable for use in a system such that information is distributed by using, for example, a BS (Broadcast Satellite) broadcast, the information is stored into a storage, and when the user wants to view it, the information stored in the storage can be viewed.

A system which provides information to the user by using the BS broadcast is considered. That is, although the BS broadcast is used for transmitting a digital satellite broadcast, the broadcast is finished at night and the user hardly watches the broadcast. The information is transmitted by the BS broadcast by using a time interval in the night-time. The information is stored into a storage of a contracted user terminal. The user views the information stored in the storage at desired time.

If the system is designed in a manner such that data can be transmitted and received through, for example, a telephone line between the storage in which the received information has been stored and an information distribution center which provides the information, the user can return an action to the information distribution center on the basis of the stored information. For example, if shopping information is transmitted from the information distribution center, the user can return an access to purchase goods to the information distribution center in accordance with the information. It is, therefore, considered that such a system can be used in various fields such that contents such as movie or music is distributed and sold, an advertisement or brochure of goods is distributed and the goods are sold, travel information is distributed and a reservation of an air-ticket or a hotel room is performed, information of the drama or concert is distributed and a ticket is reserved and sold, and the like.

In such a system, when a list of information items stored in the storage is displayed and desired information is designated from the list of the information items, the designated information is viewed. The information in the storage is always updated by the operation of the user. Therefore, the list of the information stored in the storage is formed on the user terminal side.

When the list table of the information items stored in the storage is displayed, there is a method of sequentially arranging the information items in the order of names or storing date like "A, B, C, ..." or "a, b, c, d, e". If such a method is used, however, there is a case where the information in which the user is not much interested is arranged at a former position and the information in which the user is interested is arranged at a latter position. There is also a case where some information has priorities and it is demanded that the information of the high priority is arranged at a former position.

In such a system, although the information received at night is successively stored into the storage, there is a limitation in a memory capacity of the storage. In case of storing new information, therefore, it is necessary to delete some information which has been stored so far. As a method of deleting the stored information, there is a method of sequentially deleting the information in the order from the old information. However, if such a method is used, there is a possibility that the information that is often used by the user or the information of the high priority is deleted.

Further, there is a case where when the information received at night is stored into the storage, if it is stored in receiving order, the storage is occupied by the useless information and when the interesting information of the user or the information of the high priority is tried to be stored, there is no empty capacity in the storage.

It is, therefore, an object of the invention to provide an information processing method and an information receiving apparatus, in which information items can be displayed in the optimum order and information can be deleted or stored from/into a storage in the optimum order as set out in the appended claims.

According to the invention, attribute information showing a category of information is prepared. When the information stored in the storage is viewed, the number of accesses is counted every category of the information by using the attribute information showing the category of the information. The access tendency-of-the user is discriminated from the count value of the category of the accessed information. The access priority is discriminated from the access tendency of the user obtained by counting the number of accesses of the information of each category from the attribute information indicative of the category.

Attribute information indicative of the priority of the information is prepared. The access priority is discriminated from the attribute information indicative of the priority of the information.

When a list of the information stored in the storage is displayed, the access priority is discriminated from the attribute information showing the access tendency of the user obtained by counting the number of accesses of the information of each category from the attribute information indicative of the category or showing the priority, and the list of the information is displayed in the order from the high access priority.

When the information stored in the storage is deleted in order to assure a space area in the storage, the access priority is discriminated from the attribute information showing the access tendency of the user obtained by counting the number of accesses of the information of each category from the attribute information indicative of the category or showing the priority, and the information is deleted in the order from the low access priority.

When new information is stored into the storage, the access priority is discriminated from the attribute information showing the access tendency of the user obtained by counting the number of accesses of the information of each category from the attribute information indicative of the category or showing the priority, the information of the high access priority is filtered, and the information is stored.

Embodiments of the invention will now be described, by way of example only, with reference to the accompanying drawings in which:

Fig. 1 is a block diagram showing a construction of an information distribution system using a BS satellite to which the invention is applied;

Figs. 2A to 2C are perspective views for use in explanation of a user terminal in the information distribution system using a BS satellite to which the invention is applied;

Fig. 3 is a block diagram showing a construction of the user terminal in the information distribution system using a BS satellite to which the invention is applied;

Fig. 4 is a schematic diagram showing an example of a list of information items ;

Fig. 5 is a diagram showing an example of a tag indicative of a category code;

Fig. 6 is a schematic diagram for use in explanation of the category codes;

Fig. 7 is a schematic diagram for use in explanation of the category codes;

Fig. 8 is a diagram showing an example of a tag indicative of a priority;

Figs. 9A and 9B are schematic diagrams for use in explanation of scripts;

Fig. 10 is a flowchart for use in explanation of an automatic deletion of information;

Fig. 11 is a flowchart for use in explanation of an automatic storage of information; and

Fig. 12 is a schematic diagram for use in explanation of the automatic storage of information.

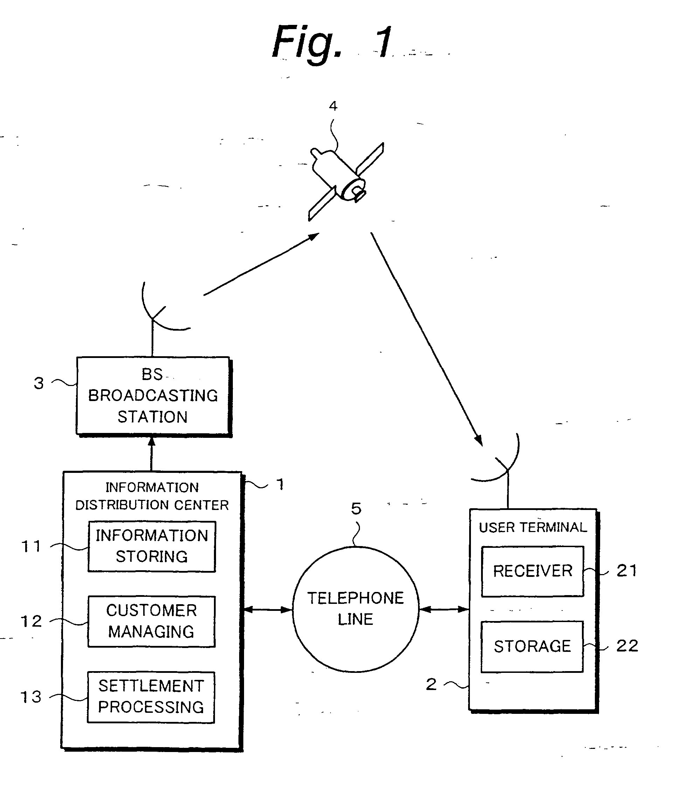

An embodiment of the invention will now be described hereinbelow with reference to the drawings. Fig. 1 shows a whole construction of a system to which the invention is applied. In Fig. 1, reference numeral 1 denotes an information distribution center. The information distribution center 1 provides various information such as motion image, still image, audio sound, and the like to the user by using a BS broadcast. As use styles of the information distribution center 1, there are considered a use style in which contents of movie or music is distributed and sold and a use style in which an advertisement or brochure of goods is distributed and the goods are sold. Further, there are considered various use methods such that travel information is distributed and an air-ticket or a hotel room is reserved, information of the drama or concert is distributed and a reservation sales of a ticket is performed, and the like.

An information storing unit 11 in which information to be distributed has been stored is provided for the information distribution center 1. The motion image, still image, audio sound, and the like of the contents which is provided as information, text information, and the like have been stored in the information storing unit 11. In the example, as will be explained hereinlater, information is transmitted in a form of a description language such as XML (eXtensible Markup Language), BML (BS Markup Language), or HTML (Hyper Text Markup Language). The motion image, still image, and audio sound are compressed and transmitted. As a compression system of the motion image, for example, an MPEG (Moving Picture Coding Experts Group) 2 is used. As a compression system of the still image, a JPEG (Joint Photographic Experts Group) or a GIF (Graphics Interchange Format) is used. As a compression system of audio sound, for example, an AAC (Advanced Audio Coding) is used. The compression systems are not limited to those mentioned above.

The information distribution center 1 has: a customer managing unit 12 for managing customers; and a settlement processing unit 13 for managing a settlement process. The information storing unit 11, customer managing unit 12, and settlement processing unit 13 can be provided at different positions and can be managed by different companies, respectively. In the case where the information storing unit 11, customer managing unit 12, and settlement processing unit 13 are provided at different positions, it is desirable to-connect the information storing unit 11, customer managing unit 12, and settlement processing unit 13 onto a network and enable information to be transmitted and received mutually.

The information distribution center 1 sends the distributing information to a broadcasting station 3 of the BS broadcast. The broadcasting station 3 distributes the received information to each user through a BS satellite 4. - As a method for information distribution, a method of distributing the information by using night-time when the user hardly watches the broadcast after the end of the BS broadcast is considered.

Reference numeral 2 denotes a user terminal. The user terminal 2 has: a receiver 21 for receiving a signal which is transmitted from the information distribution center 1 through the broadcasting station 3 and BS satellite 4; and a storage 22 comprising a hard disk drive for storing the transmitted information.

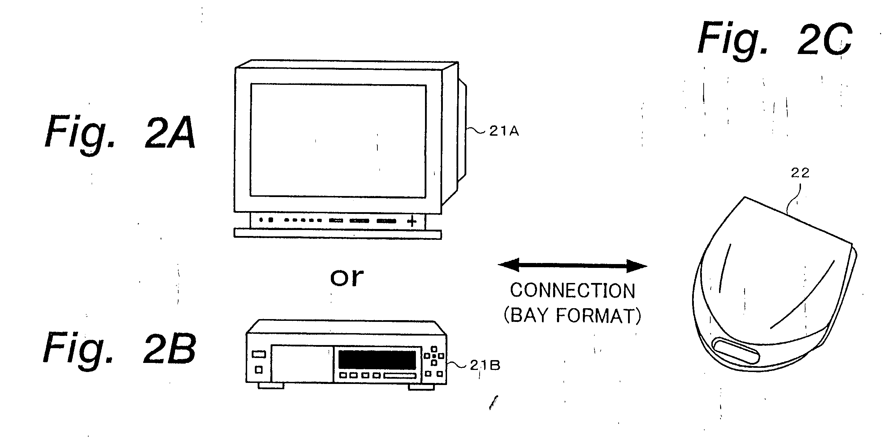

The receiver 21 receives a digital BS broadcast. As a form of such a receiver, there is a receiver 21A integrated with a television (TV) receiver as shown in Fig. 2A or a receiver 21B of a tuner type which is connected to an RF input or a video input of the existing TV receiver and used as shown in Fig. 2B.

As shown in Fig. 2C, the storage 22 is provided separately from the receiver 21, connected to the receiver 21, and used. A modem is provided for the storage 22, thereby enabling data to be transmitted and received to/from the information distribution center 1 through a telephone line 5.

Although the storage 22 and receiver 21 can be connected by a cable, there is a construction such that an attaching portion is provided for the receiver 21A integrated with the TV receiver or for the receiver 21B of the tuner - type and the storage 22 is attached to the attaching portion. With such a construction, the receiver 21 and storage 22 can be easily connected.

As a connecting form between the receiver 21 and storage 22, IEEE1394 or the like can be used. Another general interface or a dedicated interface can be also used.

As mentioned above, an ordinary receiver for receiving the digital BS broadcast is used as a receiver 21 and the storage 22 is provided separately from it. A browser by which a script such as a BML can be viewed has been installed as a standard device on the receiver 21 side of the digital BS broadcast.

The storage 22 is sold at a sales store or service shop or provided as a rental device. The user who wants to use the information distribution service constructs the user terminal 2 by attaching the storage 22 to the receiver 21 and makes a contract with the information distribution center 1.

As mentioned above, a modem has been built in the storage 22 and data can be transmitted and received to/ from the information distribution center 1 through the telephone line 5. Therefore, a contract with the information distribution center 1 can be made through the telephone line 5. By making the contract as mentioned above, its customer information is registered into the customer managing unit 12 of the information distribution center 1.

The information from the information storing unit 11 of the information distribution center 1 is sent to the broadcasting station 3 and transmitted from the broadcasting station 3 toward each user terminal 2 through the BS satellite 4. The information is transmitted, for example, in the night-time as mentioned above. The information is received by the receiver 21 of the user terminal 2 and temporarily stored in the storage 22. As mentioned above, if the storage 22 is attached to the receiver 21 and the contract with the information distribution center 1 is made, the information transmitted from the information distribution center 1, for example, in the night-time through the broadcasting station 3 and BS satellite 4 is received by the receiver 21 of the user terminal 2 and stored into the storage 22. When the user wants to view the information stored in the storage 22, he can view it any time.

In case of viewing the information stored in the storage 22 of the user terminal 2, the browser of the receiver 21 of the user terminal 2 is activated. A location (URL) designated by the user input from the information stored in the storage 22 is given. Thus, the information at a desired location is accessed from the data of the information stored in the storage 22 and a page is viewed in accordance with its description.

The storage 22 is an intelligent storage device and functions as a pseudo server which provides contents data. Therefore, the viewing process can be performed by the browser on the receiver 21 side and a load on hardware is small.

That is, if the information has been stored in an external storage, usually, desired information is read out from the external storage, decoded, converted into a video signal, synthesized, and displayed. The desired information is read out from the external storage, decoded, developed into a memory, synthesized, and displayed. However, any of those methods newly needs an image processing circuit.

In the embodiment, therefore, the storage 22 is constructed as an intelligent device. From the receiver 21 side, the storage 22 is seen as a server which provides information. That is, on the receiver 21 side, the browser is activated, a location in the storage 22 is designated, and accessed. Thus, the information is provided from the storage 22, a multimedia picture plane is formed by the browser, and displayed. In this case, all of the viewing operations can be performed by the browser and there is no need to newly add a circuit for image processes.

As mentioned above, this system is used for sales of the contents such as movie or music or sales of goods. In case of the sales of goods, if there are favorite goods, the user designates them and inputs. Thus, purchase information of the goods is sent from the user terminal 2 to the information distribution center 1 through the telephone line 5. On the basis of the information in the customer managing unit 12 or settlement processing unit 13, the information distribution center 1 refers to personal information and payment information of the user who wants to purchase the goods and delivers the goods to the user if there is no problem on settlement.

If the goods to be sold are articles, the goods are delivered to the user as mentioned above. If the goods to be sold are a movie or music, they can be directly distributed as information. However, if the information of the movie or music is directly distributed, all users can watch the movie or listen to the music.

Therefore, in case of the information of the contents such as movie or music, the information is encrypted and transmitted. If there is a favorite movie or music, the user designates the goods and inputs. Thus, a decoding key to decrypt the encryption of the goods is sent from the user terminal 2 to the information distribution center 1 through the telephone line 5. If the decoding key is set to the user terminal 2, the encryption is decoded, so that the user can watch the purchased movie or listen to the purchased music. That is, in case of the article, if the user purchased it, the goods themselves are delivered. In case of the information of movie or music, if the user purchased it, the decoding key is sent through, for example, a telephone line.

If the user wants to purchase the goods, the decoding key to decrypt the encryption of the goods is not sent from the user terminal 2 to the information distribution center 1 but it is also possible to construct the system in a manner such that the decoding key to decrypt the encryption is sent to the contracted user and if the encryption is decrypted on the user terminal 2 side, information showing a fact that the encryption was decrypted is sent from the user terminal 2 to the information distribution center 1 through the telephone line 5, thereby charging by a charge processing unit.

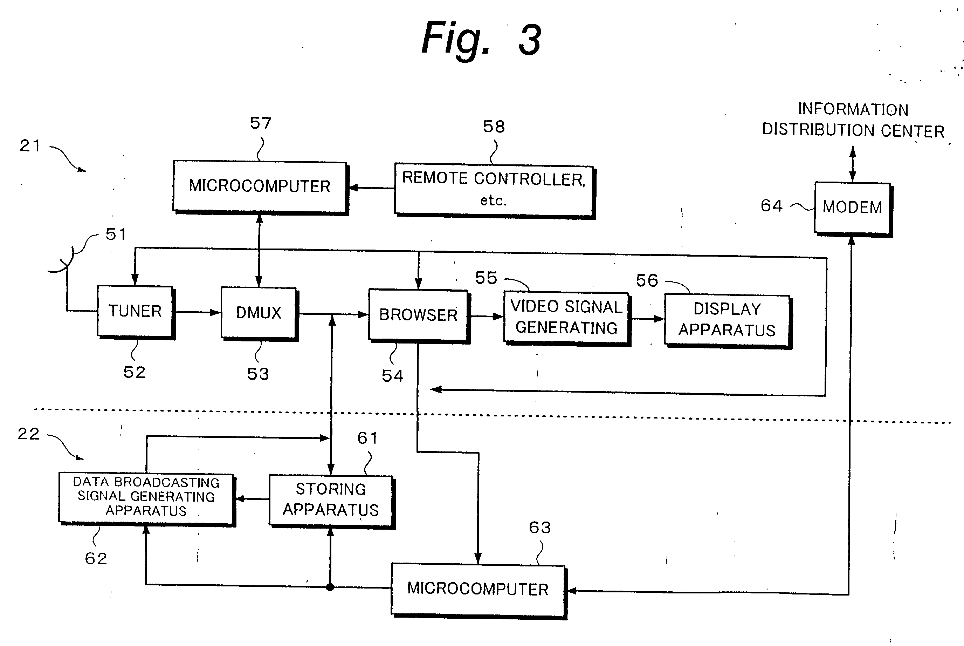

Fig. 3 shows a construction on the user terminal 2 side in such a system.

In Fig. 3, the signal from the BS satellite is received by a parabolic antenna 51. Although not shown, this signal is converted into an intermediate frequency signal by an LNB (Low Noise Block Down Converter) attached to the parabolic antenna 51. An output of the LNB of the parabolic antenna 51 is supplied to a tuner circuit 52. A receiving frequency of the tuner circuit 52 is set by an output of a microcomputer 57 in accordance with an input channel of a remote controller 58.

In the tuner circuit 52, the signal of a desired carrier is selected from the reception signal, this reception signal is demodulated, and a transport stream is decoded. This stream is supplied to a demultiplexer 53. In the demultiplexer 53, a desired packet is separated from the transport stream.

An output of the demultiplexer 53 is supplied to a browser 54. The browser 54 is used to view a multimedia picture plane. On the basis of the description of those script languages, the browser 54 forms the multimedia picture plane comprising a motion image, a still image, audio sound, a text, and the like. An output of the browser 54 is supplied to a video signal generating circuit 55. An output of the video signal generating circuit 55 is supplied to a display apparatus 56.

The storage 22 has a storing apparatus 61, a data broadcasting signal generating apparatus 62, and a microcomputer 63. A modem 64 is connected to the microcomputer 63. Data can be transmitted and received between the microcomputer 63 of the storage 22 and the information distribution center 11 by the modem 64 through the telephone line.

The signal transmitted from the broadcasting station 3 through the satellite 4 is received by the parabolic antenna 51. When the various information as mentioned above is transmitted from the broadcasting station 3, the information is decoded by the tuner circuit 52, outputted from the demultiplexer 53, and stored into the storing apparatus 61.

A list table of the information stored in the storing apparatus 61 is formed by the data broadcasting signal generating apparatus 62.

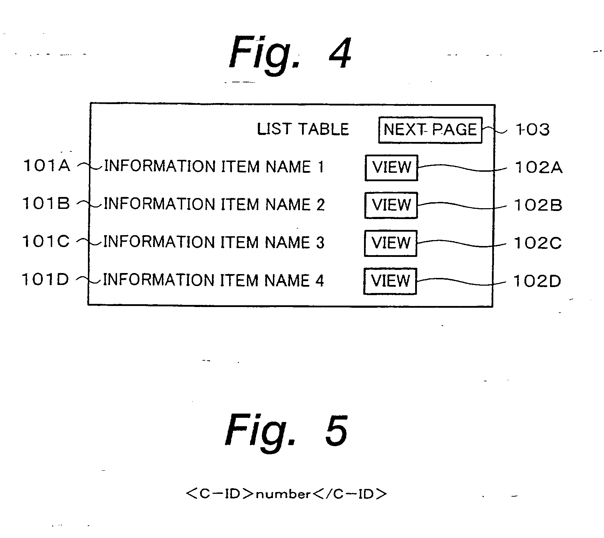

Fig. 4 shows an example of a display of a list of information items. In this example, item names 101A, 101B, 101C, and 101D, view keys 102A, 102B, 102C, and 102D, and a next page key 103 are displayed in the list table of the information items. As item names, there are title names and artist names of music pieces in case of an example of the music distribution, and there are names of goods in case of an example of goods sales, and the like. The view keys 102A, 102B, 102C, and 102D are used for displaying the motion image or still image information shown by the item names or reproducing music.

The motion image information, still image information, music information, and text information transmitted by the BS satellite 4 have been stored in the storing apparatus 61. From those information, information (this information is also described by the XML, BML, or HTML) for displaying the list of the information items is formed by the data broadcasting signal generating apparatus 62. The information of the list of the information items is sent from the data broadcasting signal generating apparatus 62 to the browser 54. Thus, a list of music information as shown in Fig. 4 is displayed.

In case of using the information stored in the storage 22, a list of information items as shown in Fig. 4 is displayed. Necessary information is selected from the list of the information items by setting the view keys 102A, 102B, 102C, and 102D by the operation of, for example, the remote controller 58.

When desired information is designated, an input is sent from the microcomputer 57 to the browser 54. On the basis of this input, the location of the designated information is supplied from the browser 54 to the microcomputer 63. In the microcomputer 63, the information existing at the inputted location is accessed and this information is sent to the browser 54 and displayed by the display apparatus 56.

As mentioned above, in this example, the received information is stored into the storing apparatus 61. A list table of the information items showing the list of the information stored into the storing apparatus 61 is formed by the data broadcasting signal generating apparatus 62 of the storage 22 of the user terminal 2.

When the information items are arranged into the list table of the information items, a method of arranging them in the order of names or in the order of storing dates "A, B, C, ..." or "a, b, c, d, e" is considered. However, if such an arranging method is used, there is a case where the information in which the user is not much interested is arranged at a former position and the interesting information of the user is arranged at a latter position.

Therefore, attributes showing a category are prepared in the invention. The attributes of the category show a category of the information. An access tendency of the user can be found by using the information category.

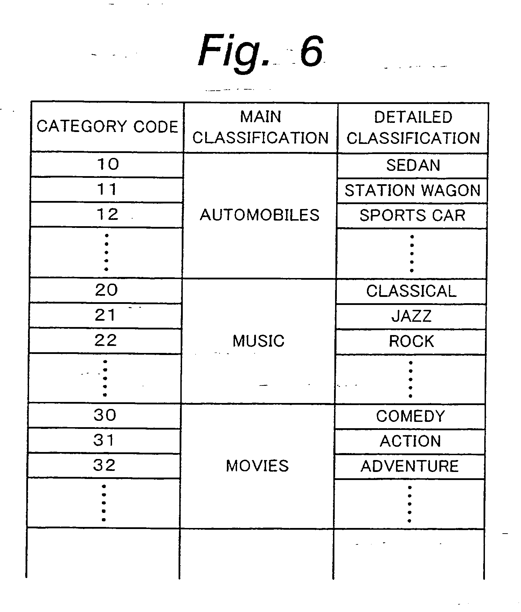

For example, as shown in Fig. 5, the attributes of the category are expressed by the number showing a category code between a tag of <C-ID> and a tag of </C-ID>. According to the category code, for example, as shown in Fig. 6, the upper number shows a main classification in a manner such that "10" to "19" indicate the field concerning automobiles, "20" to "29" indicate the field concerning music, and "30" to "39" indicate the field concerning movie. Further, in the field concerning automobiles, the lower numbers indicate detailed classification in a manner such that "10" indicates a sedan, "11" indicates a station wagon, and "12" indicates a sports car.

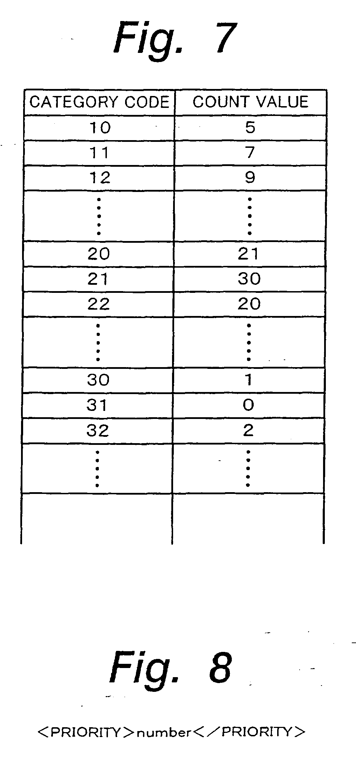

For example, a click counter is provided for the microcomputer 63 every category code as shown in Fig. 7. When the user presses the view keys 102A, 102B, 102C, ... in the list table and accesses the information, a click counter value corresponding to the category code of the accessed information is increased each time the information is accessed. Thus, an access tendency of the user can be known.

For example, the count value of the click counter of the category code whose upper number is equal to "1" like category code of "11" or "12" is large, it will be understood that the user is interested in automobiles and an access tendency to the information regarding the automobiles is high.

When the list table of the information items stored in the storing apparatus 61 is formed by the data broadcasting signal generating apparatus 62, the count values of the click counters are referred to. The information items are arranged in the order from the large count value of the click counter. Thus, the information item list is displayed in accordance with the access tendency of the user.

In the above example, the order in the list of the information items is determined in the data broadcasting signal generating apparatus 62 of the user terminal 2 on the basis of the access tendency of the user. However, it can be also determined on the information distribution center 1 side.

That is, each time one of the view keys 102A, 102B, 102C, ... of the list table is pressed, the category code of the information is stored. When the information items are viewed several times as mentioned above, the categories are sequentially stored. When the user terminal 2 is connected to the information distribution center 1 through the telephone line 5, a list of the category codes stored so far is sent to the information distribution center 1. In the information distribution center 1, a category order table is formed in the order from the high view frequency. The category order table is sent from the information distribution center 1 to the user terminal 2. In the data broadcasting signal generating apparatus 62 of the storage 22, the list table of the information items is formed in the order based on the supplied category order table.

As mentioned above, in the above example, since the tags (<C-ID> ... </C-ID>) indicative of the attributes of the category are prepared, the list of the information items which can be arranged in the order of view frequencies of the user. Thus, the list of the information items which can be easily used to the user can be provided.

There is also a method of displaying the information item list in the order of significance of the information. For example, when the information is an advertisement, it is considered that the significance of the sponsor who paid a more advertisement fee is higher. In this case, the significance of the information is determined in the order of sponsor who paid a higher advertisement fee and it is desirable to display the information item list in the order of significance of the information.

In the invention, therefore, attributes showing the significance of the information are prepared. For example, as shown in Fig. 8, the attributes of the significance are expressed by the number indicative of a priority between a tag of <PRIORITY> and a tag of </PRIORITY>.

The priority of the information is referred to when the information item list table of the information stored in the storing apparatus 61 is formed by the data broadcasting signal generating apparatus 62. The information items are arranged in the order from the high priority.

Further, there is a method of deciding the order of list table of the information by using both access tendency and value of the priority. In this case, a control ratio according to the access tendency and a control ratio according to the priority are first determined. The general priority is determined from the control ratios by -the following equation.

$$\text{(view frequency)} \times \alpha + \text{(priority)} \times (1 - \alpha)$$
$$= \text{general priority}$$

The view frequency denotes a count value of the counter of the foregoing category code viewed. The item priority is expressed by a numeral within a range of 100 to 1, and 100 indicates the maximum priority. $\alpha$ denotes a ratio of both control ratios and is set to a value of 0 to 1. The general priority indicates a result of the above relational expression, so that it is determined in the display order of list table. For example, assuming that $\alpha = 0.5$, the view frequency = 20, and the priority = 30, the general priority is equal to 25.

In case of forming the list table of the information by using both of the access tendency of the user and the priority, the general priority is obtained by the above equation. The information items are arranged in the order of obtained general priority from the high priority.

As mentioned above, in the system to which the invention is applied, with respect to the list of the information items, the order of information items is determined by using the access tendency of the user or the priority or using both of them. Therefore, the information which the user wants to know is arranged at an upper position in the information item list or the information of the high priority is arranged at an upper position in the information item list.

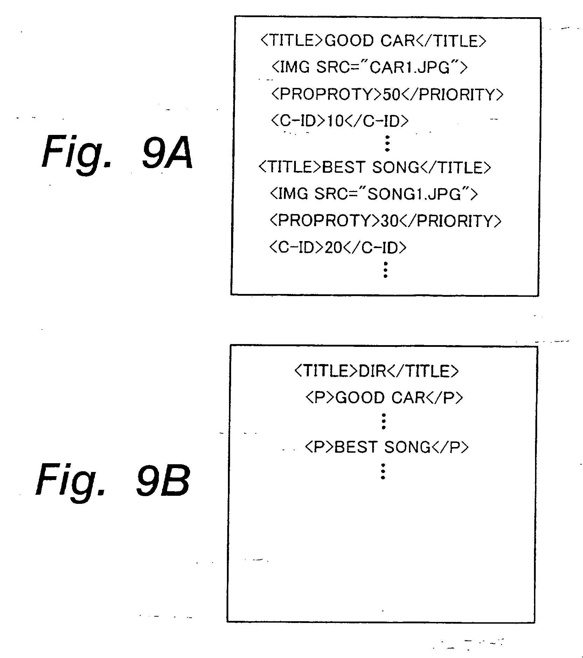

Fig. 9A shows a description example of the information which is sent. As shown in Fig. 9A, the tags (<C-ID> ... </C-ID>) showing the category codes are included in the description as mentioned above. The category of the information is known from the number surrounded by the tags indicative of the category codes. The access tendency of the user can be known by counting the number of viewing times of the category.

The tags (<PRIORITY> ... </PRIORITY>) showing the significance are included in the description. The significance of the information is known from the number surrounded by the tags indicative of the significance.

Fig. 9B shows a description example of the information item list. The list of the information items can be formed by arranging the information in the description of each information shown in Fig. 9B in the order of general priority using the access tendency of the user or the priority or using both of them.

For example, if a template of the information item list is prepared and the information of title names (<TITLE> ... </TITLE>) is allocated into (<P> ... </P>) of the template in the order of number surrounded by the tags (<PRIORITY> ... </PRIORITY>) showing the significance in the script of each information from the large number, the information item list in which the item information has been arranged in the order of significance can be formed.

In case of arranging the list of the item information in the order of access tendency of the user or the significance, the number of accesses of each code in the tags (<C-ID> ... </C-ID>) showing the priority in the script of each information is counted, and the information of the title names (<TITLE> ... </TITLE>) is allocated into (<P> ... </P>) of the template in the order of count value of the number of accesses from the large value, so that the information item list in which the item information has been arranged in the order of significance can be formed.

In this example, the access tendency of the user is known by the tags (<C-ID> ... </C-ID>) showing the category codes, and the priority of the information is known by the tags (<PRIORITY> ... </PRIORITY>) showing the priority. When the information is stored into the storing apparatus 61 of the storage 22 of the user terminal 2, the information can be also used in case of controlling an information.amount.

That is, the supplied information is successively stored into the storing apparatus 61 of the storage 22 of the user terminal 2 as mentioned above. However, since there is a limitation of the memory capacity of the storing unit 61, in case of storing new information, it is necessary to delete the unnecessary information.

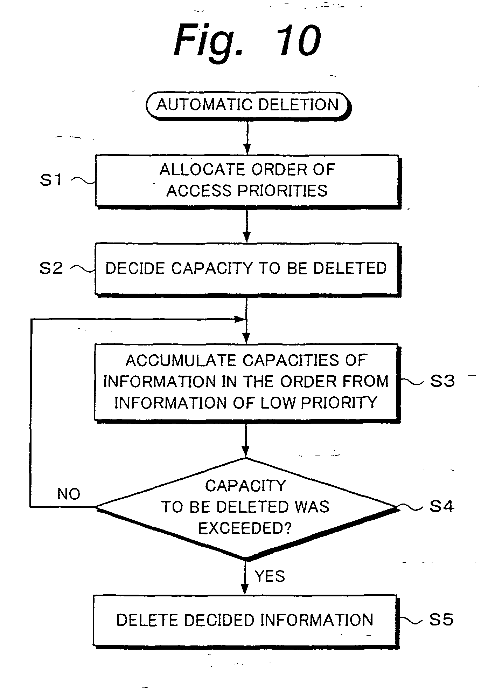

Fig. 10 is a flowchart showing processes for automatically setting a vacant capacity into the storing apparatus 61 of the storage 22 of the user terminal 2 on the basis of the access tendency of the user or the priority or both of them.

In Fig. 10, the order is allocated to the access priority of each information (step S1). As an access priority, it is possible to use the access tendency of the user which can be known by the tags (<C-ID> ... </C-ID>) showing the category codes, use the priority of the information which can be known by the tags (<PRIORITY> ... </PRIORITY>) showing the priority, or use the general priority shown in the foregoing equation.

After the order is allocated to the access priority of each information, a memory capacity to be deleted is determined (step S2). As a method of deciding the capacity to be deleted, for example, 10% of the memory capacity at that time point is deleted once a week. The deciding method of the capacity to be deleted is not limited to such a method.

A capacity of the information is accumulated in the order of access priority ordered in step S1 from the low access priority (step S3). A check is made to see if the capacity of the information accumulated in the order from the low access priority exceeds the deletion capacity decided in step S2 (step S4). If the accumulated information capacity does not exceed the capacity to be deleted, the processing routine is returned to step S3. The capacity of the information of the second lowest access priority is further accumulated into the accumulation value so far.

If it is determined in step S4 that the information capacity accumulated in the order from the low access priority exceeds the deletion capacity, the information corresponding to the information accumulated so far is deleted (step S5).

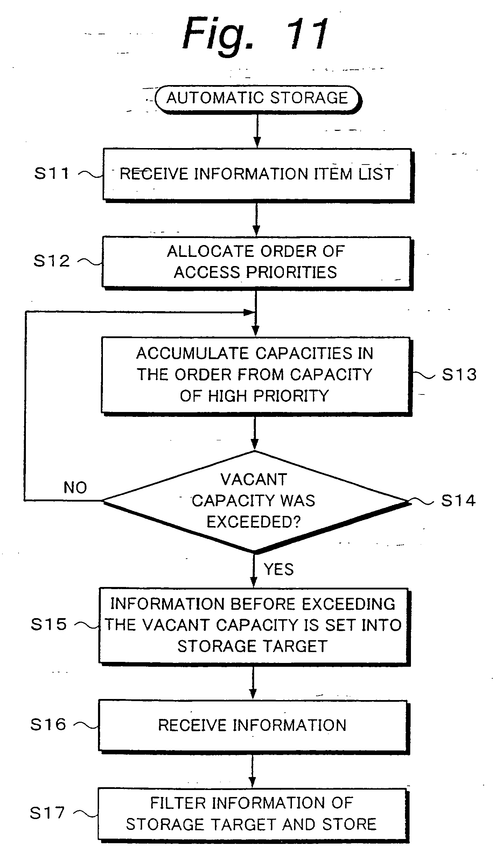

Fig. 11 is a flowchart showing processes for filtering the information of the high priority and storing it into the storing apparatus 61 of the storage 22 of the user terminal 2 on the basis of the user access tendency or the significance or both of them.

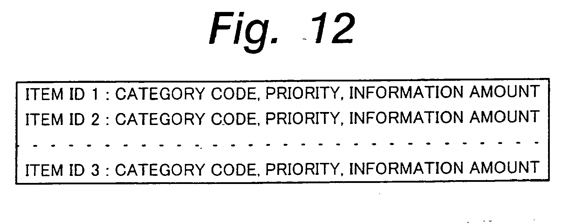

In this example, prior to transmitting the information from the information distribution center 1 through the broadcasting station 3 and BS satellite 4, the information item list is sent from the information distribution center 1. As shown in Fig. 12, the category code, priority, and information amount are included every item in the information item list.

In Fig. 11, the information item list sent from the information distribution center 1 is received (step S11). On the basis of the information of the information item list, the order is allocated to the access priority of each information (step S12). As an access priority, it is possible to use the access tendency of the user which is known from the foregoing category code, use the priority, or use the general priority.

After the order is allocated to the access priority of each information, the capacity of the information is accumulated in the order from the high access priority (step S13). A check is made to see if the capacity of the information accumulated in the order from the high access priority exceeds the vacant capacity of the storing apparatus 61 of the storage 22 of the user terminal 2 (step S14). If the accumulated information capacity does not exceed the vacant capacity, the processing routine is returned to step S13. The capacity of the information of the second highest access priority is further accumulated in the accumulation value so far.

If it is determined in step S14 that the capacity of the information accumulated in the order from the high access priority exceeds the vacant capacity of the storing apparatus 61 of the storage 22 of the user terminal 2, the accumulated information just before the information capacity exceeds the vacant capacity is stored as a target of the storage information (step S15).

When the information is transmitted from the information distribution center 1 through the broadcasting station 3 and BS satellite 4, the information is received (step S16). The information as a target of the storage information set in step S15 is filtered and stored (step S17).

As mentioned above, according to the invention, the attribute information showing the category of the information is prepared. When the information stored in the storage is viewed, the number of accesses is counted every category of-the information by using the attribute information showing the category of the information. The access tendency of the user is discriminated from the count value of the accessed category. The access priority is discriminated from the access tendency of the user obtained by counting the number of accesses of the information of every category from the attribute information showing the category. The attribute information showing the priority of the information is prepared. The access priority is discriminated from the attribute information showing the priority of the information. By using such an access priority, it is possible to decide the order in the list table, delete the information in order to assure an area, or add new information.

The information distribution center 1 can also use the list of the category codes received from each user together with marketing information. That is, the list of the category codes sent from the user shows a taste degree of the user for the goods or the like, is important information for the traders of automobiles company or the like, and can be used for marketing. For example, the information distribution center 1 can receive a predetermined commission from the trader who wants view and get the list of the category codes.

Although the above example has been described with respect to the system in case of sending the information by the BS broadcast, the invention is not limited to such a system. In the above example, although (<C-ID> ... </C-ID>) are used as tags showing the category codes and (<PRIORITY> ... </PRIORITY>) are used as tags showing the priority, such a description is shown as a mere example and, naturally, the describing method is not limited to it.

According to the invention, the attribute information showing the category of the information is prepared. When the information stored in the storage is viewed, the number of accesses is counted every category of the information by using the attribute information showing the category of the information. The access tendency of the user is discriminated from the count value of the accessed category. The access priority is discriminated from the access tendency of the user obtained by counting the number of accesses of the information of every category from the attribute information showing the category.

The attribute information showing the priority of the information is prepared. The access priority is discriminated from the attribute information showing the priority of the information.

When the list of the information stored in the storage is displayed, the access priority is discriminated from the access tendency of the user obtained by counting the number of accesses of the information of every category from the attribute information showing the category or from the attribute information showing the priority. The list of the information is displayed in the order from the high access priority. Thus, the list of the information items according to a use situation of the user or the demand from the information provider can be displayed, and the use efficiency is improved.

When the information stored in the storage is deleted in order to assure the vacant area in the storage, the access priority is discriminated from the access tendency of the user obtained by counting the number of accesses of the information of every category from the attribute information showing the category or from the attribute information showing the priority, and the information is deleted in the order from the low access priority. Thus, the information is automatically deleted from the storage in the order from the information that is not so frequently used or from the information of the low significance, so that the vacant capacity is assured.

When the new information is stored into the storage, the access priority is discriminated from the access tendency of the user obtained by counting the number of accesses of the information of every category from the attribute information showing the category or from the attribute information showing the priority, and the information of the high access priority is filtered and stored. Thus, the information whose use frequency is considered to be high for the user or the information of the high significance is automatically stored into the storage.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

**Claims**

1. An information processing method of distributing various information to the user and processing the received information on the user side, comprising the steps of:

   providing a user terminal for receiving said information to the user;
   transmitting said various information to said user terminal;

receiving and storing said transmitted information by said user terminal;

discriminating an access priority of said stored information, arranging said information in an item list in the order according to said access priority, and forming that list of said stored information by said user terminal; and

receiving information regarding the access priority of said information from said user terminal;

wherein

category attribute information showing a category of said information is added to the information which is transmitted in said transmitting step,

each time said stored information is accessed, the category of said accessed information is discriminated from said category attribute information, the number of accessing times of said information is counted for every category, an access tendency of the user is discriminated from a count value of the category of said accessed information, and said access priority is discriminated from said discriminated access tendency.

2. A method according to claim 1, wherein priority attribute information showing a priority of said information is added to the information which is transmitted in said transmitting step,

a priority is obtained from said priority attribute information and said access priority is discriminated from said priority.

3. An information processing method of distributing various information to the user and processing the received information on the user side, comprising the steps of:

providing a user terminal for receiving said information to the user;

transmitting said various information to said user terminal;

receiving and storing said transmitted information by said user terminal; and

discriminating an access priority of said stored information and deleting a determined memory capacity of said stored information in the order from the low access priority by said user terminal.

wherein

category attribute information showing a category of said information is added to the information which is transmitted in said transmitting step,

each time said stored information is accessed, the category of said accessed information is discriminated from said category attribute information, the number of accessing times of said information is counted for every category, an access tendency of the user is discriminated from a count value of the category of said accessed information, and said access priority is discriminated from said discriminated access tendency.

4. A method according to claim 3, wherein

priority attribute information showing a priority of said information is added to the information which is transmitted in said transmitting step,

the priority is obtained from said priority attribute information, and said access priority is discriminated from said priority.

5. An information receiving apparatus comprising:

receiving means for receiving information transmitted from an information transmitting unit;

information storing means for storing the information received by said receiving means; and

information forming means for discriminating an access priority of the information stored in said information storing means, arranging said information in the order according to said access priority, and forming a list of the information stored in said information storing means;

wherein

category attribute information showing a category of said information is added to the information which is transmitted from said information transmitting unit,

each time the stored information is accessed from said information storing means, the category of said accessed information is discriminated from said category attribute information, the number of accessing times of said information is counted for every category, an access tendency of the user is discriminated from a count value of the category of said accessed information, and said access priority is discriminated from said discriminated access tendency.

6. An apparatus according to claim 5,

wherein

priority attribute information showing a priority of said information is added to the information which is transmitted from said information transmitting unit,

the priority is obtained from said priority attribute information, and said access priority is discriminated from said priority

7. An information receiving apparatus comprising:

receiving means for receiving information transmitted from an information distribution center;
information storing means for storing the information received by said receiving means; and
control means for controlling the information stored in said information storing means,
wherein said control means discriminates an access priority of the information stored in said information storing means and deletes the information stored in said information storing means in the order from the information of the low access priority; and

wherein

category attribute information showing a category of said information is added to the information which is transmitted from said information distribution center,
each time the information is accessed from said information storing means, the category of said accessed information is discriminated from said category attribute information, the number of accessing times of said information is counted for every category, an access tendency of the user is discriminated from a count value of the category of said accessed information, and said access priority is discriminated from said discriminated access tendency.

8. An apparatus according to claim 7,
wherein
priority attribute information showing a priority of said information is added to the information which is transmitted from said information distribution center,
the priority is obtained from said priority attribute information, and said access priority is discriminated from said priority.

9. An information receiving apparatus comprising:

receiving means for receiving information transmitted from an information distribution center and information regarding an access priority of said information;
means for discriminating the access priority of said received information on the basis of said information regarding said access priority and selecting the information of the high access priority; and
information storing means for storing said selected information.

wherein
category attribute information showing a category of said information is added to the information which is transmitted from said information distribution center,
each time the information is accessed from said information storing means, the category of said accessed information is discriminated from said category attribute information, the number of accessing times of said information is counted for every category, an access tendency of the user is discriminated from a count value of the category of said accessed information, and said access priority is discriminated from said discriminated access tendency.

10. An apparatus according to claim 9,
wherein
priority attribute information showing a priority of said information is added to the information which is transmitted from said information distribution center,
the priority is obtained from said priority attribute information, and said access priority is discriminated from said priority.

**Patentansprüche**

1. Informationsverarbeitungsverfahren zur Verteilung unterschiedlicher Information zum Benutzer und Verarbeitung der empfangenen Information auf der Benutzerseite, aufweisend die Schritte:

Bereitstellen eines Benutzerendgeräts zum Empfang der Information beim Benutzer,

Übertragen der unterschiedlichen Information zum Benutzerendgerät,

Empfangen und Speichern der übertragenen Information durch das Benutzerendgerät,

Entscheiden einer Zugriffspriorität der gespeicherten Information, Anordnen der Information in einer Einzelheitenliste in der Ordnung entsprechend der Zugriffspriorität und Bilden dieser Liste aus der gespeicherten Information durch das Benutzerendgerät, und

Empfangen von Information betreffend die Zugriffspriorität der Information vom Benutzerendgerät,

wobei

der beim Übertragungsschritt übertragenen Information Kategorieattributinformation, die eine Kategorie der Information anzeigt, hinzugefügt wird,

jedes Mal, wenn auf die gespeicherte Information zugegriffen wird, aus der Kategorieattributinformation die Kategorie der zugegriffenen Information entschieden wird, für jede Kategorie die Anzahl von Malen eines Zugriffs auf die Information gezählt wird, aus einem Zählwert der Kategorie der zugegriffenen Information eine Zugriffstendenz des Benutzers entschieden wird und aus der entschiedenen Zugriffstendenz die Zugriffspriorität entschieden wird.

2.  Verfahren nach Anspruch 1, wobei der beim Übertragungsschritt übertragenen Information Prioritätsattributinformation, die eine Priorität der Information anzeigt, hinzugefügt wird,

aus der Prioritätsattributinformation eine Priorität erhalten wird und aus der Priorität die Zugriffspriorität entschieden wird.

3.  Informationsverarbeitungsverfahren zur Verteilung unterschiedlicher Information zum Benutzer und Verarbeitung der empfangenen Information auf der Benutzerseite, aufweisend die Schritte:

Bereitstellen eines Benutzerendgeräts zum Empfang der Information beim Benutzer,

Übertragen der unterschiedlichen Information zum Benutzerendgerät,

Empfangen und Speichern der übertragenen Information durch das Benutzerendgerät und

Entscheiden einer Zugriffspriorität der gespeicherten Information und Beseitigen einer bestimmten Speicherkapazität der gespeicherten Information in der Ordnung von der niedrigen Zugriffspriorität durch das Benutzerendgerät,

wobei

der beim Übertragungsschritt übertragenen Information Kategorieattributinformation, die eine Kategorie der Information anzeigt, hinzugefügt wird,

jedes Mal, wenn auf die gespeicherte Information zugegriffen wird, aus der Kategorieattributinformation die Kategorie der zugegriffenen Information entschieden wird, für jede Kategorie die Anzahl von Malen eines Zugriffs auf die Information gezählt wird, aus einem Zählwert der Kategorie der zugegriffenen Information eine Zugriffstendenz des Benutzers entschieden wird und aus der entschiedenen Zugriffstendenz die Zugriffspriorität entschieden wird.

4.  Verfahren nach Anspruch 3, wobei der beim Übertragungsschritt übertragenen Information Prioritätsattributinformation, die eine Priorität der Information anzeigt, hinzugefügt wird,

aus der Prioritätsattributinformation die Priorität erhalten wird und aus der Priorität die Zugriffspriorität entschieden wird.

5.  Informationsempfangsgerät, aufweisend:

eine Empfangseinrichtung zum Empfang von Information, die von einer Informationsübertragungseinheit übertragen wird,

eine Informationsspeichereinrichtung zum Speichern der von der Empfangseinrichtung empfangenen Information und

eine Informationsbildungseinrichtung zur Entscheidung einer Zugriffspriorität der in der Informationsspeichereinrichtung gespeicherten Information, Anordnung der Information in der Ordnung entsprechend der Zugriffspriorität und Bildung einer Liste der in der Informationsspeichereinrichtung gespeicherten Information,

wobei

der von der Informationsübertragungseinheit übertragenen Information Kategorieinformation, die eine Kategorie der Information anzeigt, hinzugefügt wird,

jedes Mal, wenn von der Informationsspeichereinrichtung auf die gespeicherte Information zugegriffen wird, aus der Kategorieattributinformation die Kategorie der zugegriffenen Information entschieden wird, für jede Kategorie die Anzahl von Malen eines Zugriffs auf die Information gezählt wird, aus einem Zählwert der Kategorie der zugegriffenen Information eine Zugriffstendenz des Benutzers entschieden wird und aus der entschiedenen Zugriffstendenz die Zugriffspriorität entschieden wird.

6. Gerät nach Anspruch 5, wobei
der von der Informationsübertragungseinheit übertragen Information Prioritätsattributinformation, die eine Priorität der Information anzeigt, hinzugefügt wird,
aus der Prioritätsattributinformation die Priorität erhalten wird und aus der Priorität die Zugriffspriorität entschieden wird.

7. Informationsempfangsgerät, aufweisend:

eine Empfangseinrichtung zum Empfang von Information, die von einem Informationsverbreitungszentrum übertragen wird,
eine Informationsspeichereinrichtung zum Speichern der von der Empfangseinrichtung empfangenen Information und
eine Steuerungseinrichtung zur Steuerung der in der Informationsspeichereinrichtung gespeicherten Information,
wobei
die Steuerungseinrichtung eine Zugriffspriorität der in der Informationsspeichereinrichtung gespeicherten Information entscheidet und die in der Informationsspeichereinrichtung gespeicherte Information in der Ordnung von der Information der niedrigen Zugriffspriorität beseitigt, und
wobei
der vom Informationsverbreitungszentrum übertragen Information Kategorieattributinformation, die eine Kategorie der Information anzeigt, hinzugefügt wird,
jedes Mal, wenn von der Informationsspeichereinrichtung auf die Information zugegriffen wird, aus der Kategorieattributinformation die Kategorie der zugegriffenen Information entschieden wird, für jede Kategorie die Anzahl von Malen eines Zugriffs auf die Information gezählt wird, aus einem Zählwert der Kategorie der zugegriffenen Information eine Zugriffstendenz des Benutzers entschieden wird und aus der entschiedenen Zugriffstendenz die Zugriffspriorität entschieden wird.

8. Gerät nach Anspruch 7, wobei
der vom Informationsentscheidungszentrum übertragenen Information Prioritätsattributinformation, die eine Priorität der Information anzeigt, hinzugefügt wird,
aus der Prioritätsattributinformation die Priorität erhalten wird und aus der Priorität die Zugriffspriorität entschieden wird.

9. Informationsempfangsgerät, aufweisend :

eine Empfangseinrichtung zum Empfang von Information, die von einem Informationsverbreitungszentrum übertragen wird, und von Information betreffend eine Zugriffspriorität der Information,
eine Einrichtung zur Entscheidung der Zugriffspriorität der empfangenen Information auf der Basis der Information betreffend die Zugriffspriorität und Auswahl der Information der hohen Zugriffspriorität und
eine Informationsspeichereinrichtung zum Speichern der ausgewählten Information,
wobei
der vom Informationsverbreitungszentrum übertragen Information Kategorieattributinformation, die eine Kategorie der Information anzeigt, hinzugefügt wird,
jedes Mal, wenn von der Informationsspeichereinrichtung auf die Information zugegriffen wird, aus der Kategorieattributinformation die Kategorie der zugegriffenen Information entschieden wird, für jede Kategorie die Anzahl von Malen eines Zugriffs auf die Information gezählt wird, aus einem Zählwert der Kategorie der zugegriffenen Information eine Zugriffstendenz des Benutzers entschieden wird und aus der entschiedenen Zugriffstendenz die Zugriffspriorität entschieden wird.

10. Gerät nach Anspruch 9, wobei
der vom Informationsverbreitungszentrum übertragenen Information Prioritätsattributinformation, die eine Priorität der Information anzeigt, hinzugefügt wird,
aus der Prioritätsattributinformation die Priorität erhalten wird und aus der Priorität die Zugriffspriorität entschieden wird.

**Revendications**

1. Procédé de traitement d'information consistant à distribuer diverses informations à l'utilisateur et à traiter l'information reçue sur le côté d'utilisateur, comprenant les étapes de :

   fourniture à l'utilisateur d'un terminal utilisateur pour recevoir ladite information ;
   transmission audit terminal utilisateur desdites diverses informations ;
   réception et stockage de ladite information transmise par ledit terminal utilisateur ;
   discrimination d'une priorité d'accès de ladite information stockée, agencement de ladite information dans une liste d'éléments dans l'ordre conformément à ladite priorité d'accès et formation de cette liste de ladite information stockée par ledit terminal utilisateur ; et
   réception d'une information concernant la priorité d'accès de ladite information en provenance dudit terminal utilisateur,
   dans lequel une information d'attribut de catégorie représentant une catégorie de ladite information est additionnée à l'information qui est transmise au niveau de ladite étape de transmission,
   chaque fois que ladite information stockée est accédée, la catégorie de ladite information accédée est discriminée par rapport à ladite information d'attribut de catégorie, le nombre de fois d'accès de ladite information est compté pour chaque catégorie, une tendance d'accès de l'utilisateur est discriminée à partir d'une valeur de comptage de la catégorie de ladite information accédée et ladite priorité d'accès est discriminée à partir de ladite tendance d'accès discriminée.

2. Procédé selon la revendication 1, dans lequel :

   une information d'attribut de priorité représentant une priorité de ladite information est additionnée à l'information qui est transmise au niveau de ladite étape de transmission,
   une priorité est obtenue à partir de ladite information d'attribut de priorité et ladite priorité d'accès est discriminée à partir de ladite priorité.

3. Procédé de traitement d'information consistant à distribuer diverses informations à l'utilisateur et à traiter l'information reçue sur le côté d'utilisateur, comprenant les étapes de :

   fourniture à l'utilisateur d'un terminal utilisateur pour recevoir ladite information ;
   transmission audit terminal utilisateur desdites diverses informations ;
   réception et stockage de ladite information transmise par ledit terminal utilisateur ; et
   discrimination d'une priorité d'accès de ladite information stockée et suppression d'une capacité mémoire déterminée de ladite information stockée dans l'ordre depuis la priorité d'accès basse par ledit terminal utilisateur,
   dans lequel une information d'attribut de catégorie représentant une catégorie de ladite information est additionnée à l'information qui est transmise au niveau de ladite étape de transmission,
   chaque fois que ladite information stockée est accédée, la catégorie de ladite information accédée est discriminée par rapport à ladite information d'attribut de catégorie, le nombre de fois d'accès de ladite information est compté pour chaque catégorie, une tendance d'accès de l'utilisateur est discriminée à partir d'une valeur de comptage de la catégorie de ladite information accédée et ladite priorité d'accès est discriminée à partir de ladite tendance d'accès discriminée.

4. Procédé selon la revendication 3, dans lequel :

   une information d'attribut de priorité qui représente une priorité de ladite information est ajoutée à l'information qui est transmise au niveau de ladite étape de transmission, la priorité est obtenue à partir de ladite information d'attribut de priorité et ladite priorité d'accès est discriminée à partir de ladite priorité.

5. Appareil de réception d'information comprenant :

   un moyen de réception pour recevoir une information transmise depuis une unité d'émission d'information ;
   un moyen de stockage d'information pour stocker l'information reçue par ledit moyen de réception ; et
   un moyen de formation d'information pour discriminer une priorité d'accès de l'information stockée dans ledit moyen de stockage d'information, pour agencer ladite information dans l'ordre conformément à ladite priorité d'accès et pour former une liste de l'information stockée dans ledit moyen de stockage d'information,
   dans lequel :

une information d'attribut de catégorie qui représente une catégorie de ladite information est additionnée à l'information qui est transmise depuis ladite unité d'émission d'information,

chaque fois que l'information stockée est accédée à partir dudit moyen de stockage d'information, la catégorie de ladite information accédée est discriminée à partir de ladite information d'attribut de catégorie, le nombre de fois d'accès de ladite information est compté pour chaque catégorie, une tendance d'accès de l'utilisateur est discriminée à partir d'une valeur de comptage de la catégorie de ladite information accédée et ladite priorité d'accès est discriminée à partir de ladite tendance d'accès discriminée.

6. Appareil selon la revendication 5, dans lequel :

une information d'attribut de priorité qui représente une priorité de ladite information est additionnée à l'information qui est transmise depuis ladite unité d'émission d'information,

la priorité est obtenue à partir de ladite information d'attribut de priorité et ladite priorité d'accès est discriminée à partir de ladite priorité.

7. Appareil de réception d'information comprenant :

un moyen de réception pour recevoir une information transmise depuis un centre de distribution d'information ;
un moyen de stockage d'information pour stocker l'information reçue par ledit moyen de réception ; et
un moyen de commande pour commander l'information stockée dans ledit moyen de stockage d'information, dans lequel ledit moyen de commande discrimine une priorité d'accès de l'information stockée dans ledit moyen de stockage d'information et supprime l'information stockée dans ledit moyen de stockage d'information dans l'ordre depuis l'information de priorité d'accès basse ; et

dans lequel :

une information d'attribut de catégorie qui représente une catégorie de ladite information est additionnée à l'information qui est transmise depuis ledit centre de distribution d'information,

chaque fois que l'information est accédée depuis ledit moyen de stockage d'information, la catégorie de ladite information accédée est discriminée à partir de ladite information d'attribut de catégorie, le nombre de fois d'accès de ladite information est compté pour chaque catégorie, une tendance d'accès de l'utilisateur est discriminée à partir d'une valeur de comptage de la catégorie de ladite information accédée et ladite priorité d'accès est discriminée à partir de ladite tendance d'accès discriminée.

8. Appareil selon la revendication 7, dans lequel :

l'information d'attribut de priorité qui représente une priorité de ladite information est additionnée à l'information qui est transmise depuis le centre de distribution d'information ;

la priorité est obtenue à partir de ladite information d'attribut de priorité et ladite priorité d'accès est discriminée à partir de ladite priorité.

9. Appareil de réception d'information comprenant :

un moyen de réception pour recevoir une information transmise depuis un centre de distribution d'information et une information concernant une priorité d'accès de ladite information ;
un moyen pour discriminer la priorité d'accès de ladite information reçue sur la base de ladite information concernant ladite priorité d'accès et pour sélectionner l'information de priorité d'accès haute ; et
un moyen de stockage d'information pour stocker ladite information sélectionnée,

dans lequel :

une information d'attribut de catégorie qui représente une catégorie de ladite information est additionnée à l'information qui est transmise depuis ledit centre de distribution d'information,

chaque fois que l'information est accédée depuis ledit moyen de stockage d'information, la catégorie de ladite information accédée est discriminée par rapport à ladite information d'attribut de catégorie, le nombre de fois d'accès de ladite information est compté pour chaque catégorie, une tendance d'accès de l'utilisateur est discriminée à partir d'une valeur de comptage de la catégorie de ladite information accédée et ladite priorité d'accès est discriminée à partir de ladite tendance d'accès discriminée.

10. Appareil selon la revendication 9, dans lequel :

**EP 1 134 976 B1**

une information d'attribut de priorité qui représente une priorité de ladite information est additionnée à l'information qui est transmise depuis ledit centre de distribution d'information ;
la priorité est obtenue à partir de ladite information d'attribut de priorité et ladite priorité d'accès est discriminée à partir de ladite priorité.

# Fig. 1

4

3 — BS BROADCASTING STATION

INFORMATION DISTRIBUTION CENTER — 1

11 — INFORMATION STORING

12 — CUSTOMER MANAGING

13 — SETTLEMENT PROCESSING

5 — TELEPHONE LINE

USER TERMINAL

RECEIVER — 21

STORAGE — 22

2

Fig. 2A

Fig. 2B

Fig. 2C

21A

21B

22

or

CONNECTION
(BAY FORMAT)

EP 1 134 976 B1

# Fig. 3

EP 1 134 976 B1

# Fig. 4

| | LIST TABLE | NEXT PAGE | 103 |
| 101A | INFORMATION ITEM NAME 1 | VIEW | 102A |
| 101B | INFORMATION ITEM NAME 2 | VIEW | 102B |
| 101C | INFORMATION ITEM NAME 3 | VIEW | 102C |
| 101D | INFORMATION ITEM NAME 4 | VIEW | 102D |

# Fig. 5

<C−ID>number</C−ID>

# Fig. 6

| CATEGORY CODE | MAIN CLASSIFICATION | DETAILED CLASSIFICATION |
|---|---|---|
| 10 | | SEDAN |
| 11 | | STATION WAGON |
| 12 | AUTOMOBILES | SPORTS CAR |
| ⋮ | | ⋮ |
| 20 | | CLASSICAL |
| 21 | | JAZZ |
| 22 | MUSIC | ROCK |
| ⋮ | | ⋮ |
| 30 | | COMEDY |
| 31 | | ACTION |
| 32 | MOVIES | ADVENTURE |
| ⋮ | | ⋮ |
| | | |

# Fig. 7

| CATEGORY CODE | COUNT VALUE |
|:---:|:---:|
| 10 | 5 |
| 11 | 7 |
| 12 | 9 |
| ⋮ | ⋮ |
| 20 | 21 |
| 21 | 30 |
| 22 | 20 |
| ⋮ | ⋮ |
| 30 | 1 |
| 31 | 0 |
| 32 | 2 |
| ⋮ | ⋮ |
| | |

# Fig. 8

<PRIORITY>number</PRIORITY>

*Fig. 9A*

```
<TITLE>GOOD CAR</TITLE>
 <IMG SRC="CAR1.JPG">
 <PROPROTY>50</PRIORITY>
 <C-ID>10</C-ID>
                :
<TITLE>BEST SONG</TITLE>
 <IMG SRC="SONG1.JPG">
 <PROPROTY>30</PRIORITY>
 <C-ID>20</C-ID>
                :
```

*Fig. 9B*

```
<TITLE>DIR</TITLE>
 <P>GOOD CAR</P>
        :
  <P>BEST SONG</P>
        :
```

EP 1 134 976 B1

# Fig. 10

```
        ( AUTOMATIC DELETION )
                  │
                  ▼
S1 ─┐   ┌──────────────────────┐
    └───│   ALLOCATE ORDER OF   │
        │    ACCESS PRIORITIES  │
        └──────────────────────┘
                  │
                  ▼
S2 ─┐   ┌──────────────────────────┐
    └───│ DECIDE CAPACITY TO BE DELETED │
        └──────────────────────────┘
                  │
      ┌───────────┤
      │           ▼
      │   ┌──────────────────────────┐
      │   │ ACCUMULATE CAPACITIES OF │
      │   │ INFORMATION IN THE ORDER FROM │─ S3
      │   │ INFORMATION OF LOW PRIORITY │
      │   └──────────────────────────┘
      │           │
      │           ▼
      │        ╱─────────────╲
   NO │       │   CAPACITY    │
      └───────│ TO BE DELETED WAS │─ S4
              │   EXCEEDED?   │
               ╲─────────────╱
                  │ YES
                  ▼
        ┌──────────────────────────┐
        │ DELETE DECIDED INFORMATION │─ S5
        └──────────────────────────┘
```

23

## Fig. 11

```
         ( AUTOMATIC STORAGE )
                  │
                  ▼
S11 ─┐  RECEIVE INFORMATION ITEM LIST
                  │
                  ▼
S12 ─┐     ALLOCATE ORDER OF
           ACCESS PRIORITIES
                  │
                  ▼
        ACCUMULATE CAPACITIES IN
        THE ORDER FROM CAPACITY      ─ S13
          OF HIGH PRIORITY
                  │
                  ▼
            ╱ VACANT      ╲
   NO      ╱ CAPACITY WAS  ╲      ─ S14
  ◄───────╲   EXCEEDED?    ╱
           ╲              ╱
                  │ YES
                  ▼
        INFORMATION BEFORE EXCEEDING
S15 ─┤  THE VACANT CAPACITY IS SET INTO
              STORAGE TARGET
                  │
                  ▼
S16 ─┐      RECEIVE INFORMATION
                  │
                  ▼
S17 ─┐     FILTER INFORMATION OF
           STORAGE TARGET AND STORE
```

# Fig. 12

ITEM ID 1 : CATEGORY CODE, PRIORITY, INFORMATION AMOUNT
ITEM ID 2 : CATEGORY CODE, PRIORITY, INFORMATION AMOUNT
- - - - - - - - - - - - - - - - - - - - - - - - - - - - - - - - - -
ITEM ID 3 : CATEGORY CODE, PRIORITY, INFORMATION AMOUNT